# EUROPEAN PATENT APPLICATION

(11) **EP 3 539 695 A1**
(43) Date of publication of application: **18.09.2019**
(21) Application number: 19162117.6
(22) Date of filing: 12.03.2019
(51) Int. Cl.: B22F 3/105, B33Y 10/00, B33Y 30/00, B33Y 40/00

(54) **METHODS AND APPARATUS FOR POWDER BED ADDITIVE MANUFACTURING**

(30) Priority: 12.03.2018 GB 201803888; 12.03.2018 EP 18161177
(71) Applicant: Renishaw PLC, Wotton-under-Edge, Gloucestershire GL12 8JR (GB)
(72) Inventor: Jones, Nicholas, Wotton-under-Edge, Gloucestershire GL12 8JR (GB); Ewing, David Garry James, Stone, Staffordshire ST15 0SH (GB); Munday, Jonathan Charles, Stone, Staffordshire ST15 0SH (GB); Sutcliffe, Christopher John, 2500-493 Foz do Arehlo (PT); BROWN, Ceri, 77447 Champs sur Marne (FR)
(74) Representative: Matthews, Paul

(57) **Abstract**

This invention concerns a powder bed additive manufacturing apparatus comprising a build chamber (101), a build platform (102) located in the build chamber (101) for supporting the object (103) as it is built and a powder bed (104), a powder dispenser (109) for dispensing powder into the build chamber (101) to be formed into layers of the powder bed, a scanner (106) for directing an energy beam to solidify powder of the powder bed (104) and a powder transport system (120) for transporting powder from a powder input/recovery location to the dispenser (109). The powder transport system (120) may comprise a pneumatic powder transport system and a gas circuit for generating a gas flow of inert gas in which the powder is entrained to transport the powder to the dispenser (120). A gas dryer (128) may be provided for drying inert gas in the gas flow circuit, wherein the powder is entrained in the dried inert gas during transport to the powder dispenser (120).

## Description

### Field of Invention

This invention concerns methods and apparatus for powder bed additive manufacturing. The invention has particular application to controlling moisture content of an atmosphere surrounding material being solidified during additive manufacturing.

### Background

In powder bed additive manufacturing objects are produced through layer-by-layer solidification of powder material. There are various methods of powder bed additive manufacturing, including selective laser melting (SLM) and electron beam melting.

In selective laser melting, a powder layer, such as a metal powder layer, is deposited on a powder bed in a build chamber and a laser beam is scanned across portions of the powder layer that correspond to a cross-section (slice) of the object being constructed. The laser beam melts the powder to form a solidified layer. After selective solidification of a layer, the powder bed is lowered by a thickness of the newly solidified layer and a further layer of powder is spread over the surface and solidified, as required. Through this layer-by-layer process, one or more objects are formed.

Moisture can have an adverse impact on metal powder bed fusion in several ways. Even a small quantity of moisture can affect powder flow, disrupting the dosing and spreading of thin powder layers. Furthermore, water molecules contain oxygen, which is readily absorbed by many metal alloys when they are in the molten state, affecting their ductility and fatigue performance once they solidify. The other element in the water molecule - hydrogen - can embrittle metal alloys, contributing to stress fractures and failed builds in some materials.

US2014/0178241 A1 discloses an additive manufacturing apparatus comprising a pulverant material supply surrounded by a zirconium-based liner. Bleed holes in the liner allow fluid to pass from the liner to the pulverant material. In use, the liner is heated to an activation temperature, above which impurities are absorbed, and fluid, such as argon gas, is circulated through the pulverant material to remove impurities in the pulverant material.

WO2016/062714 A1 discloses additive manufacturing apparatus comprising a getter for absorbing oxygen, nitrogen and/or hydrogen from atmosphere in the chamber. The getter may be provided in a gas recirculating loop for recirculating gas through the build chamber.

WO2016/102970 A1 discloses additive manufacturing apparatus comprising a cooling device arranged to cool an internal surface of a gas flow circuit.

EP3178585 A1 discloses a method for treating powder comprising forming a layer of powder and applying a voltage to the powder layer to produce a uniform plasma arc across the surface area whilst the powder is held in a low pressure (between 10Pa and 10kPa) argon or nitrogen atmosphere. The argon ions and free electrons collide with the surfaces of the particles and sweep away an oxide film or foreign substance adhering to the particles.

US2010/0192806 A1 discloses a system for recycling remaining powder from equipment for generatively manufacturing three-dimensional objects. The system has, in addition to a sieving device or a mixing device, a further device for modifying a characteristic of the powder resulting from the sieving or mixing. The further device can be a device for drying or moistening the remaining powder.

### Summary of Invention

According to a first aspect of the invention there is provided a method of preparing a filter cartridge for powder bed additive manufacturing, the filter cartridge to be used to filter solid particles from a gas flow which traverses a powder bed during solidification of the powder, the method comprising drying the filter cartridge prior to the filter cartridge being used to filter solid particles from the gas flow during powder bed additive manufacturing.

It has been found that the filter material of the filter cartridge, typically paper material, can contain significant amounts of moisture if the filter cartridge has been exposed to air before insertion into an enclosure of a powder bed additive manufacturing apparatus. Drying the filter cartridge prior to the filter cartridge being used to filter solid particles from the gas flow during powder bed additive manufacturing reduces, or even eliminates, moisture introduced into the gas flow through the filter cartridge. Furthermore, the dry filter cartridge readily absorbs moisture present in the atmosphere that passes therethrough. Accordingly, in use, moisture released from the powder bed when the powder bed is heated and carried away by a gas flow may be scrubbed from the gas flow by the filter cartridge.

The method may comprise enclosing the filter cartridge in a sealed enclosure after drying for storage and or transport prior to use in a powder bed additive manufacturing apparatus. The method may comprise vacuum packing the filter cartridge in the sealed enclosure. The method may comprise enclosing the filter cartridge in the sealed enclosure within an inert atmosphere, such as an argon or nitrogen inert atmosphere. Drying of the filter cartridge will typically take place outside of the powder bed additive manufacturing apparatus as it can take hours for the filter cartridge to become sufficiently dry. Hence, storing the filter cartridge in a manner that maintains the dryness of the filter cartridge will normally be required. The method may comprise drying the filter cartridge in an oven. The filter cartridge may be dried in the oven at or above 100 degrees centigrade. The filter cartridge may be dried in the oven for at least 1 hour, at least 2 hours and most preferably at least 4 hours.

During powder bed additive manufacturing, the filter cartridge may be located in a filter housing. To safely remove the used filter cartridge, the filter housing may be flooded with a fluid, such as water, to pacify the solid particles collected on the filter cartridge, as described in WO2010/026396. Accordingly, the method may further comprise drying the filter housing before insertion of a replacement filter cartridge.

The method may comprise drying the filter cartridge in a powder bed additive manufacturing apparatus. The powder bed additive manufacturing apparatus may comprise a pair of parallel filter assemblies, for example as described in WO2010/026396 or WO2016/079494, and the method may comprise drying the filter cartridge in the powder bed additive manufacturing apparatus whilst the filter cartridge of the other filter assembly of the pair is being used to filter particles from the gas flow.

The filter cartridge may be dried in the powder bed additive manufacturing apparatus by heating of the filter cartridge, passing a dry inert gas flow through the filter cartridge and/or applying a vacuum to the filter cartridge. Each filter cartridge may have a working lifetime of at least many hours if not days, weeks or months. Accordingly, this provides sufficient time for drying of the filter cartridge in the apparatus in a parallel filter system without interrupting/delaying a build. The dry inert gas flow may be generated by recirculating gas through a gas circuit including the filter cartridge, the method comprising drying the gas flow after the gas flow has passed through the filter cartridge and before the gas flow is repassed through the filter cartridge. Drying of the gas flow may comprise cooling the gas flow to condense out moisture in the gas flow, membrane drying and/or absorption drying (for example, using appropriate desiccants).

The method may comprise drying the filter cartridge prior to the filter cartridge being inserted into the powder bed additive manufacturing apparatus and then further drying the filter cartridge in the powder bed additive manufacturing apparatus prior to the filter cartridge being used to filter solid particles from the gas flow during powder bed additive manufacturing. It may be desirable to dry the filter cartridge outside of the powder bed additive manufacturing apparatus because drying of the filter cartridge may take a number of hours, however, a further "top-up" drying of the filter cartridge may be desirable in the powder bed additive manufacturing apparatus to remove moisture that is absorbed by the filter cartridge between the initial drying and insertion of the filter cartridge into the powder bed additive manufacturing apparatus.

According to a second aspect of the invention there is provided a powder bed additive manufacturing apparatus comprising a build chamber, a build platform located in the build chamber for supporting the object as it is built and a powder bed, a scanner for directing an energy beam to solidify powder of the powder bed, a gas circuit for generating a flow of inert gas across the powder bed, the gas circuit including a filter cartridge for filtering solid particles from the gas flow, and a filter drying system for drying the filter cartridge prior to the filter cartridge being used to filter solid particles from the gas flow during powder bed additive manufacturing.

The filter drying system may comprise a heater for heating of the filter cartridge.

The filter drying system may comprise a source of dry inert gas connectable to pass the dry inert gas through the filter cartridge. The source of dry inert gas may be connectable to pass the dry inert gas through the filter cartridge without interrupting the gas flow across the powder bed. The filter drying system may comprise the or a further gas circuit for recirculating gas through the filter cartridge and a gas dryer for drying the gas flow after the gas flow has passed through the filter cartridge and before the gas flow is repassed through the filter cartridge. The gas dryer may comprise a cooler for cooling the gas flow to condense out moisture in the gas flow and/or a membrane dryer for separating moisture from the gas flow and/or a moisture, oxygen or hydrogen getter (for example, desiccants).

The drying system may be arranged to apply a vacuum to the filter cartridge. The drying system may be arranged to apply a vacuum to the filter cartridge without interrupting the gas flow across the powder bed.

According to a third aspect of the invention there is provided a powder bed additive manufacturing apparatus comprising a build chamber, a build platform located in the build chamber for supporting the object as it is built and a powder bed, a powder dispenser for dispensing powder into the build chamber to be formed into layers of the powder bed, a scanner for directing an energy beam to solidify powder of the powder bed, a powder transport system for transporting powder from a powder input/recovery location to the dispenser, the powder transport system comprising a dryer for drying the powder during transport to the powder dispenser.

In this way, powder is dried in the additive manufacturing apparatus before being delivered to the build chamber. Accordingly, powder as a source for introducing moisture to the build chamber is reduced.

The powder transport system may be a pneumatic powder transport system comprising a gas circuit for generating a gas flow of inert gas in which the powder is entrained to transport the powder to the dispenser and a gas dryer for drying the inert gas in the gas flow circuit.

By entraining the powder in dried inert gas, moisture contained within the powder is separated therefrom and carried away in the gas flow, whereupon it is separated from the gas flow by the gas dryer. The dried powder is recovered to the hopper for use in a future build. It is believed that a greater proportion of the moisture will be removed through entrainment of the powder particles in the gas flow than from passing gas through a static powder bed. Furthermore, a liner having bleed holes smaller than the particles that make up the powder is not required. A liner having such small bleed holes is difficult to manufacture. Furthermore, the water, oxygen and hydrogen elements carried away by the gas flow do not contact the build surface, avoiding the possibility that these elements could react with hot material at the build surface.

The powder bed additive manufacturing apparatus may comprise a heater for heating the powder before the powder is entrained in the gas flow. The powder bed additive manufacturing apparatus may comprise a hopper for storing powder before the powder is entrained in the gas flow of the powder transport gas circuit, wherein the heater is arranged for heating the powder in the hopper. The hopper may receive powder recovered from the additive build and/or powder input into the powder bed additive manufacturing apparatus by a user. Heating of the powder may facilitate the release of moisture from the powder.

The gas dryer may comprise a cooler for cooling the gas flow to condense out moisture in the gas flow and/or a membrane dryer for separating moisture from the gas flow and/or a moisture, oxygen or hydrogen getter (for example, in the form of desiccants). The gas circuit may comprise a separator for separating powder from the gas flow and the gas dryer is located between the separator and the powder input/recovery location. The gas dryer may be located after the separator and before the powder input/recovery location in a direction of gas flow. The powder input/recovery location may be an inlet in the gas circuit from which powder is added into the additive manufacturing apparatus and/or a location where powder recovered from the build chamber is deposited for transport to the dispenser by the gas flow. The separator may comprise a cyclone and, optionally, a mesh filter for filtering out micrometre or nanometre-sized particles that are not removed by the cyclone. Drying the gas when free of powder may allow maintenance and replacement of the gas dryer without the added complications of the gas dryer being contaminated with powder that is combustible and/or dangerous to health.

The dispenser may comprise a dispense hopper from which powder is dispensed.

According to a fourth aspect of the invention there is provided a method of powder bed additive manufacturing comprising drying powder in a powder bed additive manufacturing apparatus before delivering or returning the powder to a build chamber of a powder bed additive manufacturing apparatus.

The method may comprise pneumatically transporting powder in a circulated inert gas from a powder input/recovery location to a dispenser for dispensing powder into the build chamber to be formed into layers of a powder bed and drying the inert gas to remove moisture freed from the powder during transport.

According to a fifth aspect of the invention there is provided a powder bed additive manufacturing apparatus comprising a build chamber, a build platform located in the build chamber for supporting the object as it is built and a powder bed, a scanner for directing an energy beam to solidify powder of the powder bed, a gas flow circuit for transporting an inert gas to which the powder is exposed, the gas flow circuit comprising a gas flow splitter for splitting the gas flow between first and second conduits and a gas flow combiner for recombining the gas flow from the first and second conduits and a gas dryer for drying inert gas in the first conduit.

In this way, the gas dryer may have a capacity for passing gas lower than that required to maintain a required gas flow/to dry the gas if the gas dryer was located in a region of the gas circuit that received the full volume of gas flow. This may allow use of a cheaper and smaller gas dryer. The gas flow may be dried over multiple circulations of the gas circuit, wherein the gas that is dried during travel through the first conduit is remixed with the gas that flows through the second conduit, progressively drying the gas. The gas may be pumped around the gas circuit such that the gas traverses the gas circuit in a few or tens of seconds. Preparation of the inert gas atmosphere in the apparatus may take 10 - 30 minutes and hence, there is plenty of time during preparation of the inert atmosphere for the gas to circulate around the gas circuit and be dried.

The first gas conduit and the second gas conduit may be configured to split the gas flow such that a larger proportion of the gas flow flows along the second conduit than the first conduit.

The gas circuit may be arranged such that the powder is exposed to the gas flow after the gas flow combiner and before the gas flow splitter in a direction of gas flow or in the second conduit.

The apparatus may comprise a gas flow device for generating gas flow through the build chamber, the gas flow device comprising the gas circuit for generating a gas flow of inert gas in which process emissions are entrained.

The apparatus may comprise a powder transport system comprising a pneumatic powder transport system for transporting powder from a powder input/recovery location to a powder dispenser, the powder transport system comprising the gas circuit for generating a gas flow of inert gas in which the powder is entrained to transport the powder to the dispenser.

The gas circuit may comprise a pump.

The first conduit may extend from the splitter, which is located after the pump, to the combiner, which is located before the pump, such that the that gas flows through the first conduit repasses through the pump without passing through the build chamber.

The first conduit may extend in parallel with the second conduit.

The gas dyer may comprise a material that absorbs moisture from the gas flow, such as a desiccant, for example silica gel.

The fifth aspect of the invention may be used separately from or in conjunction with one or more of the second and third aspects of the invention.

### Description of the Drawing

**Figure 1** is a schematic of a powder bed additive manufacturing apparatus according to an embodiment of the invention; and
**Figure 2** is a schematic of a powder bed additive manufacturing apparatus according to another embodiment of the invention.

### Description of Embodiments

A powder bed additive manufacturing apparatus according to an embodiment of the invention comprises a build chamber 101 having a build sleeve 117 in which a build platform 102 is movable. The build sleeve 117 and build platform 102 define a build volume 118 in which an object 103 is built by selective laser melting powder 104. The build platform 102 supports the object 103 and a powder bed 104 during the build. The platform 102 is lowered within the build sleeve 117 under the control of motor (not shown) as successive layers of the object 103 are formed.

Layers of powder are formed as the object 103 is built by lowering the platform 102 and spreading powder dispensed from dispense hopper 109 using a wiper (not shown). For example, the dispensing apparatus for dispensing powder from the dispense hopper 109 may be apparatus as described in WO2010/007396.

At least one laser module, in this embodiment laser module 105, generates a laser for melting the powder 104. The laser is directed as required by a corresponding scanner, in this embodiment optical module 106. The laser beam enters the chamber 101 via a window 107. In this embodiment, the laser module 105 comprises a fibre laser, such as Nd YAG fibre laser.

The apparatus comprises a chamber gas circuit 110 for generating a gas knife 111 across a working (top) surface of the powder bed 104 and a gas flow from the ceiling for protecting the window 107 from gas borne particles in the build chamber that are generated during the additive manufacturing process. The ceiling of the build chamber may comprise an array of gas apertures to generate a downward gas flow such as described in WO2017/013454 or US2017/087635. The chamber gas circuit 110 comprises a pump 112, a cyclone separator 113 for separating larger particles from the gas flow and a filter assembly 114 comprising a fine mesh filter cartridge for separating fine particles from the gas flow. The filter assembly 114 is a filter assembly as described in WO2010/026396 and comprises one of a pair of parallel filter assemblies 114, for example as shown in Figures 4 and 5 of WO2010/026396. Each filter assembly 114 further comprises a filter cartridge heater 116 for heating the filter cartridge contained in the filter housing. Each filter assembly 114 can be detached from the chamber gas circuit 110 by shutting corresponding gas valves 132, 133 and then uncoupling the filter assembly 114 from the chamber gas circuit 110.

A moisture sensor 108 is provided downstream of each filter assembly 114 for measuring moisture content of the gas in the gas circuit exiting the filter assembly 114.

The chamber gas circuit 110 comprises a sub-circuit 142 for circulating dried gas through the filter assembly 114. Valves 136, 137 are provided for connecting either one of the two filter assemblies 114 to the sub-circuit 142. The valves 136, 137 are arranged such that when one of the filter assemblies 114 of the pair is connected in line with the gas flow generating the gas knife 111, the other filter assembly 114 of the pair is connected in line with the sub-circuit 142.

The sub-circuit 142 comprises a pump 139, (which may have a lower capacity than pump 112) for recirculating gas through the sub-circuit and a gas dryer 115 for drying gas passed through the sub-circuit, the gas dryer 115 provided downstream of the pump 112. The gas dryer may comprise a cooler for cooling the gas flow to condense out moisture in the gas flow, a membrane dryer for separating moisture from the gas flow and/or a moisture, oxygen or hydrogen getter. Means is provided for removing moisture separated out from the gas by the gas dryer.

The sub-gas circuit may further comprise a vacuum pump 138, a supply 140 of dry argon gas and an argon supply valve 141 for controlling the supply of argon to the rest of the sub-circuit 142.

A powder transport gas circuit 120 is provided for transporting powder from a collection hopper 121 to the dispense hopper 109. Powder recovered from the build chamber 101 is collected in the collection hopper 121. In this embodiment powder is recovered through overflow channels located either side of the powder bed 104, as represented by arrow 122. During a build, excess powder remaining after a layer formation is pushed into one of the overflow channels by the wiper and, at the end of the build, the build platform 102 is raised to free the object 103 from the unconsolidated powder of the powder bed 104 and the unconsolidated powder is pushed into the overflow channels 122 by the wiper and/or the user (for example through a glove box). Powder may also be added to the collection hopper 120 via an external powder input 123.

A powder heater 124 is provided for heating the powder in the collection hopper 121 to cause the release of moisture from the powder. A powder feeder, such as screw feeder 129, controls the supply of powder into the gas flow of the powder transport gas circuit 120. The powder feeder deposits the powder to a powder recovery location 150 in the powder transport gas circuit 120. Powder released into the gas circuit 120 becomes entrained in the gas flow and is transported to separator 125. Separator 125, in the form of a cyclone, separates the powder from the gas flow and feeds the powder into dispense hopper 109. A filter assembly 126 filters out any fine particles that remain in the gas flow after the separator 125. The filter assembly 126 may also be a filter assembly as described in WO2010/026396 with valves 134 and 135 allowing gas to the filter assembly to be shut-off such that the filter assembly 126 can be decoupled from the gas circuit 120 for replacement of the filter cartridge. The filter assembly 126 further comprises a filter cartridge heater 119 for heating the filter cartridge.

A moisture sensor 131 is provided downstream of the filter assembly 126 for measuring moisture content of the gas in the gas circuit.

A pump 127 generates gas flow through the gas circuit 120. A gas dryer 128 is provided for drying gas downstream of the pump 127 and filter 126. The gas dryer 128 may comprise a cooler for cooling the gas flow to condense out moisture in the gas flow, a membrane dryer for separating moisture from the gas flow (be this by absorption or adsorption) and/or a moisture, oxygen or hydrogen getter. Means is provided for removing from the gas circuit moisture separated out from the gas by the gas dryer 128.

A controller 130 controls the modules of the additive manufacturing apparatus to carry out the method as described below.

Before insertion of the filter cartridges into the filter assemblies 114 and 126, the filter cartridges are dried using an oven. The filter cartridges may be baked in the oven at or above 100 degrees centigrade for at least 4 hours. The drying of the filters may be carried out at a site remote from the powder bed additive manufacturing apparatus, for example by a supplier of filter cartridges. Accordingly, the dried filters may be packaged, for example in an inert atmosphere, such as a vacuum or inert gas atmosphere, for delivery to an operator of the powder bed additive manufacturing apparatus such that the filter cartridge does no reabsorb moisture in the air during transport.

At the site of the additive manufacturing apparatus, the filter cartridges are removed from the packaging and inserted into housings of the filter assemblies. If the housings have previously housed a used filter cartridge, which was pacified by flooding of the filter housing, then the filter housings should be thoroughly dried before insertion of the new filter cartridge.

During operation of the powder bed additive manufacturing apparatus, the filter cartridge is subjected to an inert, usually argon, atmosphere. Between unpacking of the filter cartridge and subjecting the filter cartridge to the inert atmosphere, the filter cartridge may absorb moisture from the air. Accordingly, a further "top-up" drying cycle may be carried out under the control of controller 130 before the additive manufacturing process is commenced/before the filter assembly 114 is connected in line with the gas flow to the build chamber 101. This "top-up" drying cycle may comprise passing gas flow through the filter cartridge and drying the gas exiting the filter cartridge using sub-circuit 142. During this drying process, the filter cartridge may also be heated by heater 116. After a predetermined length of time and/or after the moisture content of the gas detected by the moisture sensor 108 is below a predetermined level, the additive manufacturing process is started/the filter assembly 114 is connected in line with the gas flow to the build chamber 101. Such a filter cartridge preparation process will eliminate, or at least reduce an amount of, moisture originating from the filter cartridge.

In an embodiment where the sub-circuit comprises a vacuum pump 138, a vacuum may be formed within the filter assembly 11 such that moisture held on the filter cartridge is boiled off and removed. This may be in addition to or as an alternative to circulating dry argon gas through the filter assembly 114.

The powder can also act as a moisture source in the additive manufacturing process. Powder from the build chamber 101 and new powder added to the additive manufacturing apparatus are transported from collection hopper 121 to dispense hopper 109 before delivery into the build chamber 101. Within the collection hopper 121, the powder is heated by heater 124. The entrainment of the heated powder in the dried inert gas flowing through the gas circuit 120 causes the release of moisture from the powder into the gas flow. The cyclone 125 separates the moisture bearing gas from the powder such that at least a proportion of the moisture is separated from the powder. In this way, the powder in hopper 109 is drier than the powder when in hopper 121.

The moisture bearing gas flows through mesh filter 126, which filters out any fine particles that remain in the gas flow. The moisture bearing gas then passes through gas dryer 128. The gas dryer removes moisture from the gas, forming dry gas that is then recirculated back to hopper 121 from which further powder is dispensed. In this way, the powder is dried before being dispensed into the chamber 101 and moisture bearing gas does not contact the working surface of the powder bed 104. Furthermore, moisture released by the filter cartridge in filter assembly 126 is also removed by the gas dryer 128

In a further embodiment, rather than having two gas circuits, a single gas circuit is provided (as schematically illustrated by the dotted lines), wherein the powder recovered from the build chamber 101 is pushed, for example by the wiper, directly into the gas flow outlet that forms the gas knife. Such an arrangement is described in International patent application No: PCT/GB2018/053022. Providing a single circuit allows one to use a common pump 127 for both transport of the powder and generation of the gas knife 111, a single cyclone, a single filter cartridge and a single gas dryer. Furthermore, the collection hopper 121 can be eliminated and the dried powder delivered immediately to the dispense hopper 109. In such an embodiment, an external powder input 223 is provided to the gas flow line to allow new powder to be introduced and entrained in the dry gas flow such that it is dried before delivery to hopper 109. Such an embodiment may also comprise a sub-circuit, for drying the filter cartridge in the filter assembly 126.

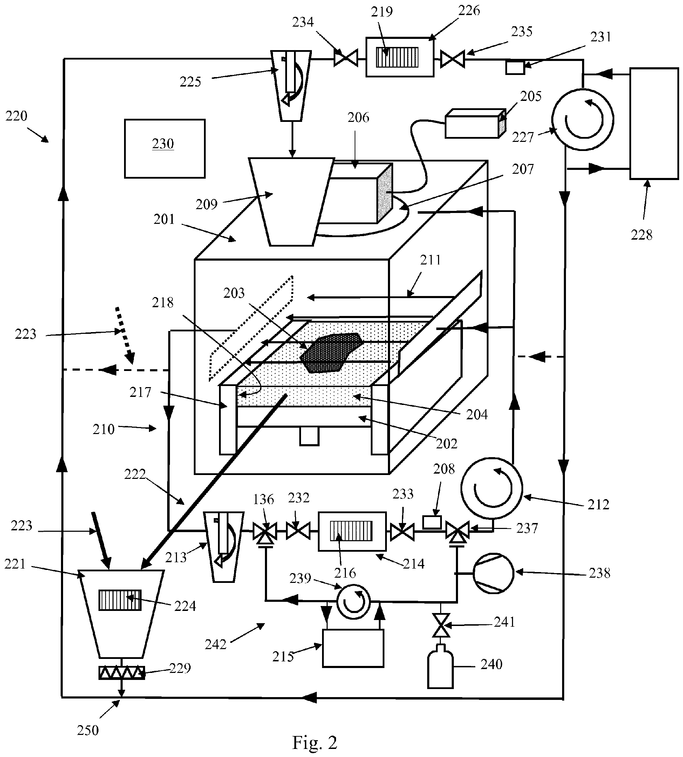

Figure 2 shows an embodiment according to another aspect of the invention.

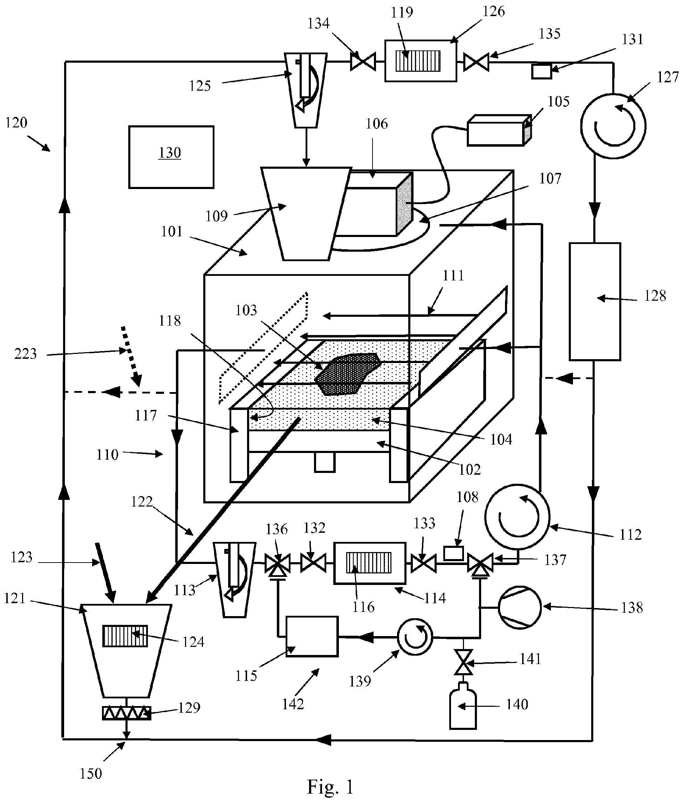

Features of this embodiment corresponding to features of the embodiment described with reference to Figure 1 have been given the same reference numerals but in the series 200. Unless otherwise stated these features are the same as those of the embodiment described with reference to Figure 1 and the features that remain unchanged between the two embodiments will not be described again.

This embodiment differs from the embodiment described with reference to Figure 1 in that each gas dryer 215, 218 is located in a first, sub-conduit split from a second, main conduit. A splitter is provided to divide the gas flow between the first and second conduits, with the majority of the gas flow being directed through the second conduit. The gas directed through the first conduit is dried by the gas dryer 215, 218 and then recombined with the gas flow in the main conduit at a location upstream of the pump 239, 237.

In use, moisture to gradually removed from the inert gas atmosphere through the continuous recirculation of gas through the gas circuit 242, 220. This embodiment may have the advantage in that a smaller gas dryer may be used. For example, if the gas dryer comprises a desiccant, such as silica gel, then a smaller amount of silica gel may be used.

Like the embodiment described with reference to Figure 1, rather than having two gas circuits, a single gas circuit is provided (as schematically illustrated by the dotted lines), wherein the powder recovered from the build chamber 201 is pushed, for example by the wiper, directly into the gas flow outlet that forms the gas knife.

It will be understood that modifications and alterations can be made to the above described embodiments without departing from the invention as defined herein.

## Claims

1. A powder bed additive manufacturing apparatus comprising a build chamber, a build platform located in the build chamber for supporting the object as it is built and a powder bed, a powder dispenser for dispensing powder into the build chamber to be formed into layers of the powder bed, a scanner for directing an energy beam to solidify powder of the powder bed, a powder transport system comprising a pneumatic powder transport system for transporting powder from a powder input/recovery location to the dispenser, the powder transport system comprising a gas circuit for generating a gas flow of inert gas in which the powder is entrained to transport the powder to the dispenser and a gas dryer for drying inert gas in the gas flow circuit, wherein the powder is entrained in the dried inert gas during transport to the powder dispenser.

2. A powder bed additive manufacturing apparatus according to claim 1, comprising a heater for heating the powder before the powder is entrained in the gas flow.

3. A powder bed additive manufacturing apparatus according to claim 1 or claim 2, comprising a hopper for storing powder before the powder is entrained in the gas flow of the powder transport gas circuit, wherein the heater is arranged for heating the powder in the hopper.

4. A powder bed additive manufacturing apparatus according to claim 3, wherein the hopper is arranged to receive powder recovered from the additive build and/or powder input into the powder bed additive manufacturing apparatus by a user.

5. A powder bed additive manufacturing apparatus according to any one of claims 1 to 4, wherein the gas dryer comprises a cooler for cooling the gas flow to condense out moisture in the gas flow.

6. A powder bed additive manufacturing apparatus according to any one of claims 1 to 5, wherein the gas dryer comprises a membrane dryer for separating moisture from the gas flow.

7. A powder bed additive manufacturing apparatus according to any one of claims 1 to 6, wherein the gas dryer comprises a moisture, oxygen or hydrogen getter.

8. A powder bed additive manufacturing apparatus according to any one of claims 1 to 7, wherein the gas circuit comprises a separator for separating powder from the gas flow and the gas dryer is located between the separator and the powder input/recovery location.

9. A powder bed additive manufacturing apparatus according to claim 8, wherein the gas dryer is located after the separator and before the powder input/recovery location in a direction of gas flow.

10. A method of powder bed additive manufacturing comprising drying powder in a powder bed additive manufacturing apparatus before delivering or returning the powder to a build chamber of a powder bed additive manufacturing apparatus, the method further comprising pneumatically transporting powder in a circulated inert gas from a powder input/recovery location to a powder dispenser for dispensing powder into the build chamber to be formed into layers of a powder bed and drying the inert gas to remove moisture freed from the powder during transport.
